# EUROPÄISCHE PATENTSCHRIFT

(11) **EP 2 566 796 B1**
(45) Veröffentlichungstag und Bekanntmachung des Hinweises auf die Patenterteilung: **13.05.2015**
(21) Anmeldenummer: 11713462.7
(22) Anmeldetag: 17.03.2011
(51) Int. Cl.: B65G 49/06, B24B 9/00, B24B 27/00, B65G 21/20

(54) **VORRICHTUNG ZUM FÖRDERN VON PLATTENFÖRMIGEN ELEMENTEN**
APPARATUS TO TRANSPORT PLATES
APPAREIL POUR TRANSPORTER DES PLAQUES

(30) Priorität: 03.05.2010 AT 7442010
(43) Veröffentlichungstag der Anmeldung: 13.03.2013
(73) Patentinhaber: LISEC Austria GmbH, 3353 Seitenstetten (AT)
(72) Erfinder: MADER, Leopold, A-3364 Neuhofen/Ybbs (AT); KRONSTEINER, Alexander, A-3372 Blindenmarkt (AT)
(74) Vertreter: Beer & Partner Patentanwälte KG
(86) Internationale Anmeldenummer: PCT/AT2011/000135
(87) Internationale Veröffentlichungsnummer: WO 2011/137467

(56) Entgegenhaltungen:
- DE-U1- 29 701 124
- JP-A- 2001 151 318
- KR-A- 20010 070 234
- US-A- 4 589 541
- US-A1- 2005 011 229
- US-A1- 2006 180 140
- US-A1- 2007 271 756
- US-A1- 2008 003 091

## Beschreibung

Die Erfindung betrifft eine Vorrichtung zum Fördern von plattenförmigen Elementen, z.B. Platten, wie (Flach-)Glastafeln mit den Merkmalen des einleitenden Teils von Anspruch 1 (JP 2001 151318 A).

Für das Fördern von plattenförmigen Elementen, wie Glastafeln, gibt es eine Vielzahl von Vorrichtungen. Bekannt sind Vorrichtungen, die mit Rollen und/oder Förderriemen oder Förderketten arbeiten.

Ein Problem bei den bekannten Fördervorrichtungen ist es, den erforderlichen Kraftschluss zwischen dem zu fördernden Element, wie beispielsweise einer Glastafel, und dem Fördermittel (Rollen, Förderbänder und dgl.) sicher zu stellen. Ein absolut gleichförmiger Transport ist beispielsweise beim Fördern von Glastafeln in Schleifanlagen, in welchen die Kanten geschliffen (besäumt) werden sollen, einerseits, und in Waschanlagen, Versiegelungsanlagen u.ä., anderseits, erforderlich.

Aus der US 2007/0271756 A ist eine Vorrichtung für das Fördern von flächigen Werkstücken (Glastafeln) bekannt, die einen vertikalen Linearförderer und Laufrollen, die das Werkstück unterstützen, aufweist.

Die US 4,589,541 A zeigt eine Vorrichtung zum Fördern von flächigen Elementen, bei der zusätzlich zu einem Linearförderer, der am unteren Rand der Elemente angreift, eine Schleppvorrichtung mit Saugköpfen, die an den Elementen oberhalb des Linearförderers angreifen, vorgesehen ist.

Aus der DE 297 01 124 U ist eine Transportvorrichtung bekannt, bei der plattenförmige Werkstücke zwischen einem Endlosförderer und einer ein flexibles Band aufweisenden Andruckvorrichtung eingespannt gefördert werden.

Die US 2005/0011229 A zeigt eine Vorrichtung zum Bearbeiten der Ränder von Glastafeln mit einer Einrichtung zum Führen derselben, die zwei Paare mit Fluid beaufschlagten Führungsköpfen, die einander gegenüber liegen. Der Transport der Glastafeln erfolgt dabei ausschließlich durch einen Linearförderer, der am unteren Rand der Glastafeln angreift.

Eine Vorrichtung zum Bearbeiten von Glastafeln, bei der die Glastafeln durch an deren unterem Rand angreifende Förderrollen bewegt werden zeigt die KR 2001-0070234 A.

Aus der gattungsbildenden JP 2001 151318 A ist eine Vorrichtung für das Fördern horizontal ausgerichteter flächiger Werkstücke bekannt, bei der ein Linearförderer (2, 3) und diesem gegenüberliegend ein Kasten vorgesehen ist, aus dem Luft austritt, die ein zwischen dem Linearförderer und dem Balken angeordnetes Werkstück kraftschlüssig gegen den Linearförderer (2) drückt.

Der Erfindung liegt die Aufgabe zu Grunde, eine Fördervorrichtung anzugeben, die einen gleichmäßigen Transport von lotrecht oder im Wesentlichen lotrecht ausgerichteten, plattenförmigen Elementen, wie Glastafeln, gewährleistet.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung zum Fördern von platten- oder tafelförmigen Elementen (Gegenständen), wie Glastafeln, an einer Seite ein angetriebenes (Linear-) Fördermittel, wie beispielsweise eine Reihe von Förderrollen oder ein (Endlos-)Förderband, vorgesehen ist, und der nötige Kraftschluss zwischen dem (Linear-)Fördermittel und dem zu fördernden Element durch wenigstens ein auf der dem Fördermittel gegenüberliegenden Seite des zu fördernden Elementes vorgesehenes Fluidkissen, vornehmlich ein Kissen aus einer Flüssigkeit, insbesondere ein Wasserkissen, herbeigeführt wird, ergibt sich ein gleichförmiger Transport. Dabei werden die dem Fördermittel gegenüberliegenden Flächen des zu fördernden Elementes mechanisch (d.h. von Rollen, Förderbändern, usw.) nicht berührt, da das zu fördernde Element auf dieser Fläche lediglich durch den Fluidfilm (Wasserfilm) belastet wird. Dies ist insbesondere vorteilhaft, wenn Glastafeln zu fördern sind, die auf einer Seite eine Beschichtung aufweisen, wie dies beispielsweise für Wärmeschutzglas oder Glas für photovoltaische Elemente und Anlagen der Fall ist.

Die erfindungsgemäße Fördervorrichtung kann beispielsweise bei Schleifanlagen und/oder Waschanlagen oder in Anlagen zum Herstellen von Isolierglas eingesetzt werden.

Bei der Erfindung ist vorgesehen sein, dass das zu fördernde Element von unten her durch Laufrollen abgestützt wird. Von der Rückseite her kann das zu fördernde Element, insbesondere wenn die Förderebene im Wesentlichen lotrecht ist, durch eine Wand, beispielsweise eine Luftkissenwand, abgestützt sein, wobei die Wand, wie an sich bekannt, etwas, z.B. 5°, aus der Lotrechten nach hinten geneigt sein kann.

Bei der Erfindung ist die erfindungsgemäße Fördervorrichtung sowohl im unteren Bereich als auch im oberen Bereich eines zu fördernden Elementes vorzusehen. So können, wenn die erfindungsgemäßen Fördervorrichtungen beispielsweise in Glasschleifanlagen verwendet werden, sowohl die unteren als auch die oberen Ränder der Glastafeln durch Schleifen gleichzeitig bearbeitet werden.

Die Laufrollen , die das zu fördernde Element von unten her abstützen, können angetriebene oder frei laufende Laufrollen sein.

Insbesondere bewährt sich die erfindungsgemäße Fördervorrichtung im Zusammenhang mit Maschinen, die zum Bearbeiten der Glaskanten für Solarelemente bestimmt sind. So können die Kanten und Ecken durch Schleifscheiben, wie Umfangsprofilierscheiben, und/oder Schleifbänder (kreuzweise angeordnete Schleifbänder) in einem einzigen Durchgang bearbeitet werden, wobei einerseits die Taktzeit einer nachfolgenden Härteanlage erreicht wird, und gleichzeitig auch die Schleifqualität über den gesamten Lebensdauerbereich der Schleifscheiben und Schleifbänder gleichbleibend ist.

Die Umrüstzeit ist um ein Vielfaches geringer als bei konventionellen, horizontalen Verfahren mit Mehrkopfschleifsystemen.

Die erfindungsgemäßen Transportvorrichtungen können auch in Anlagen zum Kanten- und Stirnflächenschleifen von rechteckigen Glastafeln in einem vollautomatischen Durchlaufzyklus mit (Umfangs-)Schleifscheiben und/oder Diamantschleifbändern eingesetzt werden. Dabei werden die Glastafeln im Wesentlichen vertikal stehend durch die Anlage geführt, wobei sie nur auf einer Seite (Rückseite) über die Transportmittel (Rollen oder Bänder) gestützt, und durch das Fluid- insbesondere Wasserkissen von der Vorderseite her gegen die Transportmittel gedrückt werden.

Im Einzelnen kann eine Anlage zum Schleifen von rechteckigen Glastafeln beispielsweise aus zwei Schleifmaschinen mit einem dazwischen angeordneten Wendeapparat bestehen, derart, dass es möglich ist, im kontinuierlichen Durchlauf alle vier Ränder von rechteckigen Glastafeln zu bearbeiten.

Mit der erfindungsgemäßen Fördervorrichtung kann eine Glastafel in einer Schleif-/ Säumanlage nahezu senkrecht stehend transportiert und im Durchlaufbetrieb in der Schleifanlage an der Ober- und Unterkante ohne kraftschlüssige Führung an der Vorderseite bearbeitet werden, da die Scheibe während der Bearbeitung von dem Fluid- (insbesondere Wasser)Kissen gegen die Transportmittel gedrückt wird und während der Bearbeitung im Durchlaufbetrieb gut stabilisiert ist.

Wenn in einer Anlage zum Schleifen/Besäumen von rechteckigen Glastafeln mit Hilfe von Schleifscheiben und/oder Schleifbändern, die beispielsweise gekreuzt angeordnet sind (vgl. EP 0 920 954 A), gearbeitet wird, kann zwischen den Schleifstationen eine Wendestation vorgesehen sein, die das Wenden der Glastafeln um 90° bewirkt, wenn die Glastafel die erste Schleifstation verlassen hat. Dabei kann so gearbeitet werden, dass die in einer Beladestation aufgegebene Glastafel von einem Wendeapparat zunächst so ausgerichtet wird, dass ihre längeren Kanten im Wesentlichen lotrecht stehen, sodass zunächst die kürzeren Kanten bearbeitet (geschliffen und/oder besäumt) werden. Nach dem Verlassen der ersten Schleifanlage wird die Glastafel wieder gewendet, sodass die längeren Kanten jetzt horizontal ausgerichtet sind, und in der zweiten Schleifanlage bearbeitet werden. So wird der Abstand zur vorlaufenden Glastafel reduziert und es besteht die Möglichkeit, den Weitertransport in die nachfolgende Waschanlage nahezu lückenlos vorzunehmen.

Die in den Wendestationen vorgesehenen Wendeapparate umfassen bevorzugt einen Wendegreifer mit zwei zueinander normal stehenden Armen, wobei die Greifer um eine zur Förderebene senkrecht stehende Achse verschwenkbar sind. Vorzugsweise ist vorgesehen, dass die Arme des Wendeapparates mit Fingern ausgestattet sind, die an den Armen des Wendeapparates aus einer zur Förderebene bzw. zu der von den beiden Armen des Wendeapparates definierten Ebene normal stehenden Lage (Wirklage) in eine zu der genannten Ebene parallele Lage (Bereitschaftslage) verschwenkbar angeordnet sind. Diese Ausbildung der Wendeapparate mit verschwenkbaren Fingern, stellt sicher, dass die Wendeapparate in den Wendestationen die an der Stützwand, beispielsweise einer Luftkissenstützwand, lehnenden Werkstücke (Glastafeln) lediglich an ihren Rändern berühren, dass die der Stützwand gegenüberliegende (vordere) Seite, die beispielsweise mit einer Beschichtung oder für Photovoltaik ausgerüstet ist, beim Wenden in den Wendestationen nicht berührt werden. Für das Rückschwenken der Wendeapparate in den Wendestationen werden die Finger in ihre Bereitschaftslage verschwenkt, sodass sie von den nachfolgenden bzw. durchtransportierten Glastafeln Abstand haben, diese also, beispielsweise wenn kein Wendevorgang erforderlich ist, einfach durch die Wendestation transportiert werden können. Weitere Einzelheiten, Merkmale und Vorteile der Erfindung ergeben sich aus der nachstehenden Beschreibung bevorzugter Ausführungsbeispiele einer Vorrichtung gemäß der Erfindung anhand der Zeichnungen.

Es zeigt:
Fig. 1 im Beispiel eine Anlage mit zwei Schleifstationen und einer Waschstation, sowie mit zwei Wendeapparaten,
Fig. 2 schematisch eine Schleifstation,
Fig. 3 eine weitere Ausführungsform einer Schleifstation von vorne,
Fig. 4 die Schleifstation aus Fig. 3 von hinten,
Fig. 5 eine Einzelheit der Schleifstation von Fig. 3 und 4,
Fig. 6 eine Einzelheit des Wasserkissenbalkens,
Fig. 7 eine Einzelheit des Wasserkissenbalkens in einer anderen Ausführungsform,
Fig. 8 eine Wendestation und
Fig. 9 die Wendestation aus Fig. 8 in anderer Ansicht.

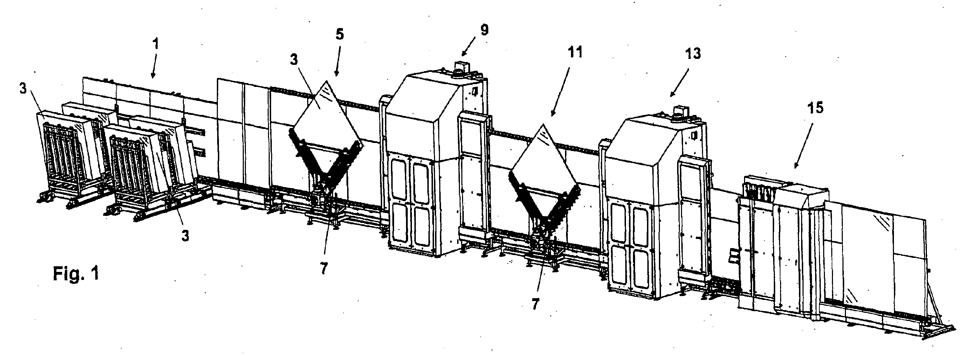

Eine in Fig. 1 gezeigte Anlage zum Herstellen von Glastafeln mit geschliffenen/besäumten Kanten umfasst eine Beladestation 1, in welcher Glastafeln 3 von einer Glasschneideanlage oder einem Speicher kommend der Anlage aufgegeben werden. Nach der Beladestation 1 ist eine erste Wendestation 5 mit einem ersten Wendeapparat 7 vorgesehen, der die der Anlage aufgegebenen Glastafeln 3 so ausrichtet, dass ihre längeren Kanten lotrecht stehen. In der daraufhin vorgesehenen, ersten Schleifstation 9 werden im Durchlauf die oberen und unteren horizontalen Ränder der Glastafel 3 bearbeitet, insbesondere geschliffen und/oder besäumt.

Nach der ersten Schleifstation 9 ist eine zweite Wendestation 11 mit einem zweiten Wendeapparat 7 vorgesehen, der die Glastafel 3 um 90° wendet, sodass jetzt die noch nicht bearbeiteten (längeren) Ränder der Glastafel 3 horizontal ausgerichtet sind. Im Anschluss an die zweite Wendestation 11 ist eine zweite Schleifstation 13 vorgesehen, in der die jetzt horizontal ausgerichteten, (längeren) oberen und unteren Ränder der Glastafel 3 bearbeitet (geschliffen/besäumt) werden. Im Anschluss daran ist eine Waschanlage 15 vorgesehen, in welcher die fertig besäumten Glastafeln 3, die beschichtete Glastafeln 3 und/oder Glastafeln 3 für Solaranlagen sein können, gewaschen werden.

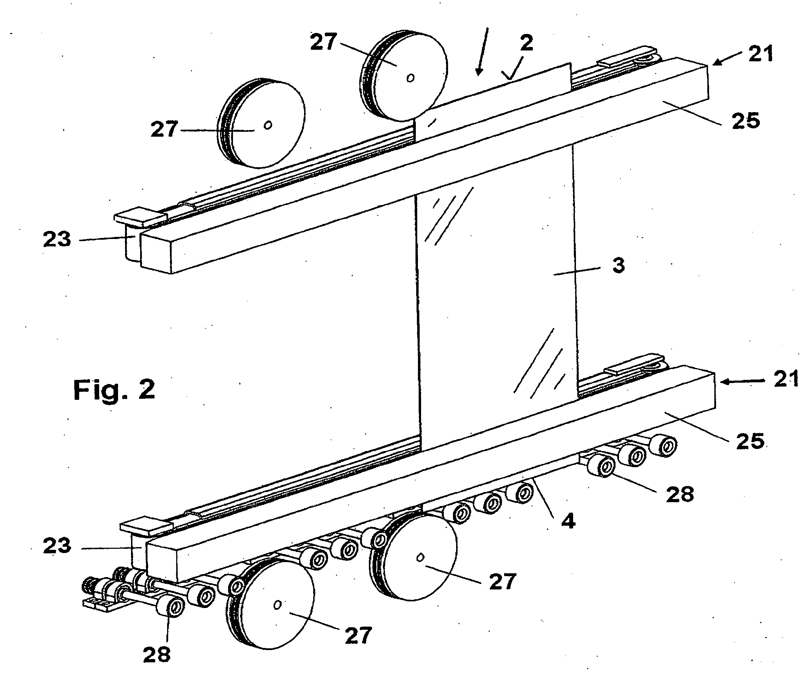

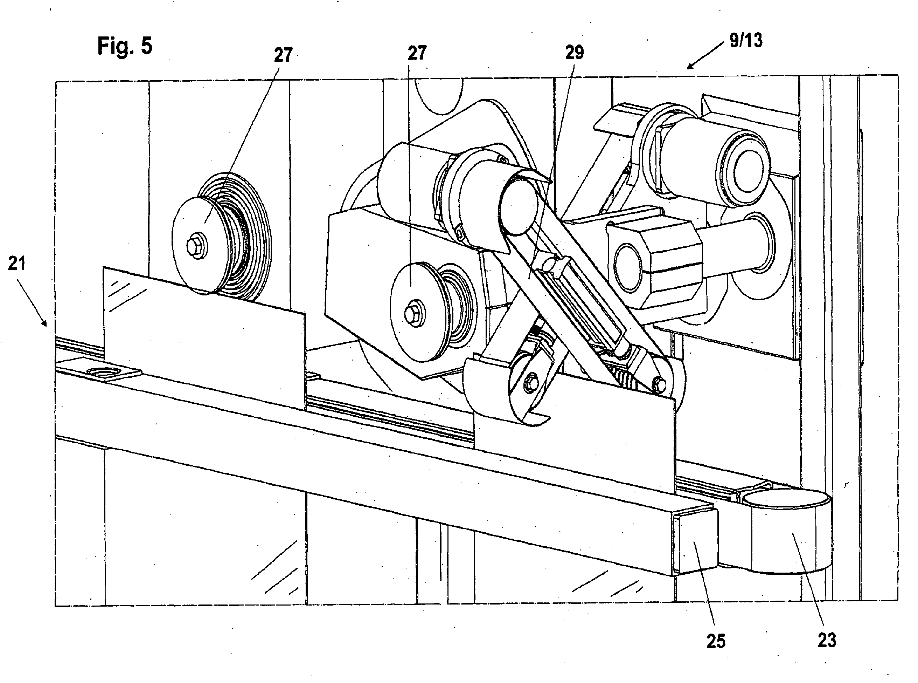

In den Schleifstationen 9 und 13 und in der Waschstation 15 sind Vorrichtungen 21 für den Transport der Glastafeln 3 vorgesehen, wie sie in mehr Einzelheiten in den Fig. 2 und 5 gezeigt sind. Diese Fördervorrichtungen 21 bestehen jeweils aus einem angetriebenen Zahnriemen 23 (oder einer Folge von Zahnriemen) und aus einem diesem gegenüber angeordneten Wasserkissenbalken 25. Unterhalb der Anordnung 21 aus Zahnriemen 23 und Wasserkissenbalken 25 sind Laufrollen 28 (gegebenenfalls angetrieben) vorgesehen, auf welchen die zu transportierende (zu fördernde) Glastafel 3 aufsteht.

Vorrichtungen 21 aus Zahnriemen 23 (als Linearfördermittel) und Wasserkissenbalken 25 (Fluidkissenbalken) sind am unteren und am oberen Rand 2, 4 der Glastafel 3 so angeordnet, dass diese mit ihrem oberen Rand 2 nach oben und mit ihrem unteren Rand 4 nach unten übersteht. So ist der bearbeitende Angriff durch Schleifscheiben 27 und Schleifbänder 29 (Fig. 5) möglich.

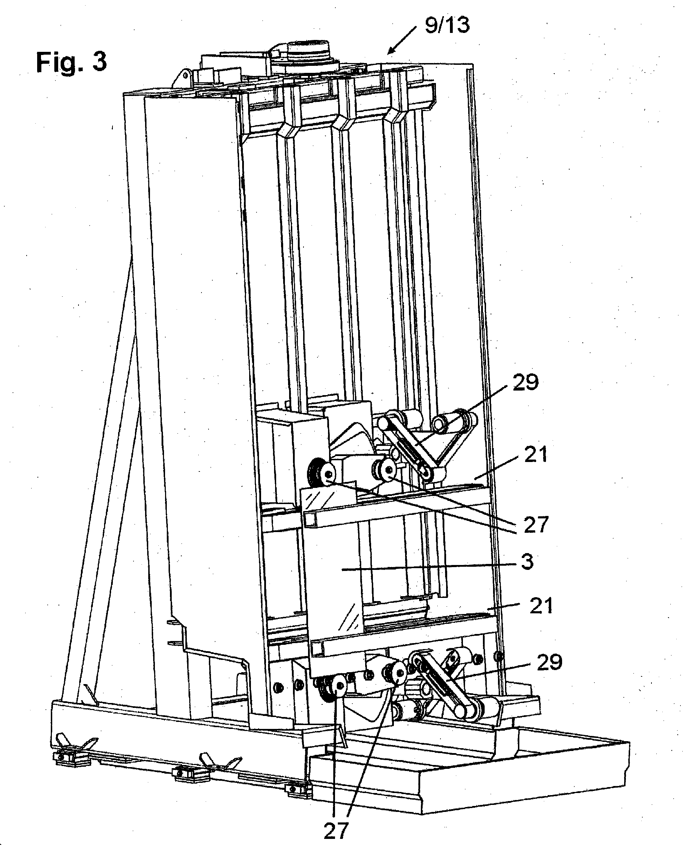

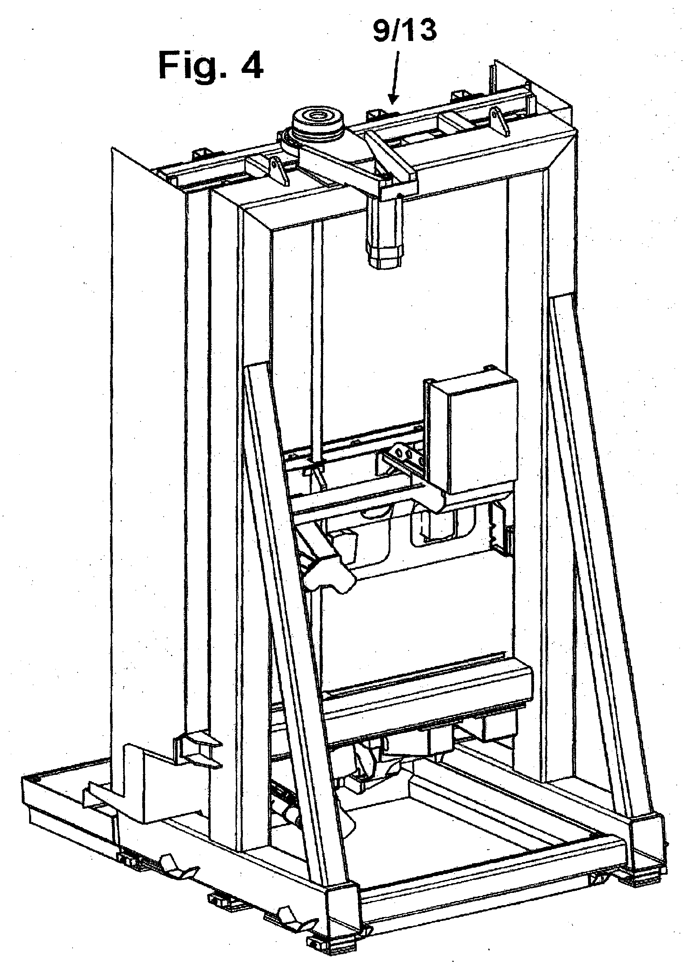

Dabei ist die obere Vorrichtung 21 aus Wasserkissenbalken 25 und Riemenantrieb 23 höhenverstellbar, wie dies insbesondere in den Fig. 3 und 4 gezeigt ist.

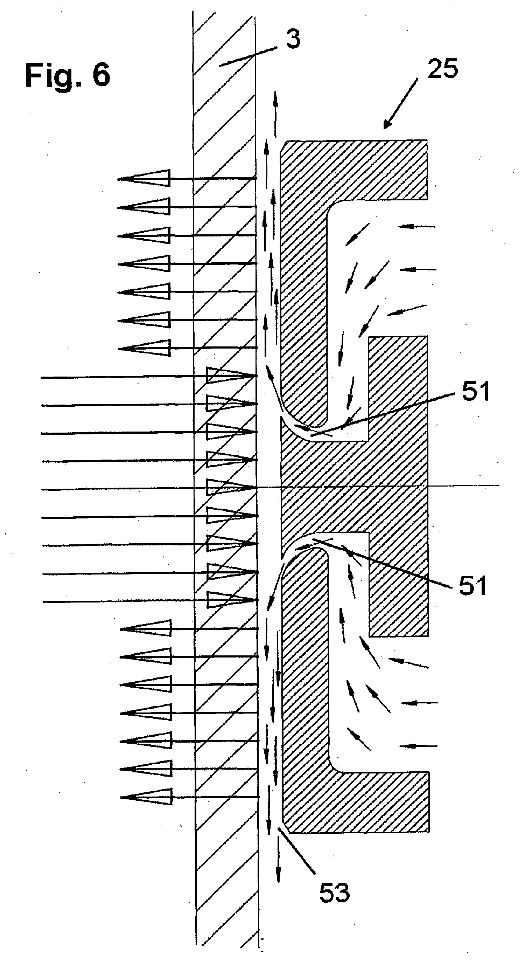

Eine erste mögliche Ausführungsform eines Wasserkissenbalkens 25 (Vorrichtung um eine Glastafel 3 gegen die Linearfördervorrichtung 23 zu drücken) - diese kann auch mit einem gasförmigen Fluid betrieben werden - ist in Fig. 6 gezeigt. Bei dieser Ausfüh-rungsform wird das Fluid (Gas oder insbesondere Wasser) durch zwei schmale Spalte 51 in den Raum 53 zwischen der Glastafel 3 und dem Wasserkissenbalken 25 gedrückt, sodass auf Grund des Bernoulliprinzipes, wie es in Fig. 6 durch Pfeile angedeutet ist, die Glastafel 3, ohne dass sie vom Wasserkissenbalken 25 berührt wird, in konstantem Abstand von diesem gehalten und gleichzeitig gegen den Förderriemen 23 des Linearförderers gedrückt wird.

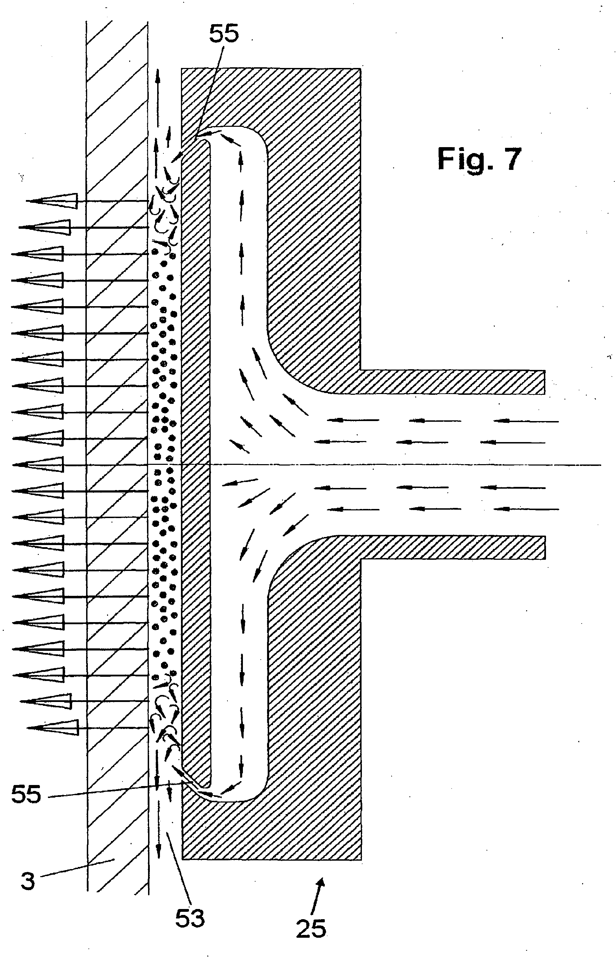

Eine andere Ausführungsform eines Fluid- bzw. Wasserkissenbalkens 25 ist in Fig. 7 gezeigt. Hier wird Fluid (Gas oder insbesondere Flüssigkeit, wie Wasser) aus zwei schlitzförmigen Öffnungen 55 in den Raum 53 zwischen Wasserkissenbalken 25 und Glastafel 3 gedrückt. Dabei sind die Austrittsöffnungen 55, durch welche das Fluid (Wasser) austritt, so geneigt, dass sie aufeinanderzu schräg gestellt sind, sodass sich im Bereich zwischen den Austrittsdüsen 55 (diese sind beispielsweise Schlitzdüsen) ein erhöhter Druck bildet, der die Glastafel 3 als Werkstück sicher gegen den Riementrieb 23 drückt, sodass der nötige Kraftschluss für den sicheren Transport des Werkstückes (Glastafel 3) erzielt wird.

Sowohl bei der Ausführungsform nach Fig. 6 als auch bei der nach Fig. 7 besteht die Möglichkeit dem Wasserkissenbalken 25 mit der in den Fig. 6 und 7 gezeigten Querschnittsform über die gesamte Länge einstückig auszubilden oder aber aus mehreren Abschnitten zusammenzusetzen, wobei in Betracht gezogen ist, dass jeweils runde Elemente vorgesehen sind, sodass die Austrittsdüsen 51 und 53 Ringdüsen sind. Dessen ungeachtet sind langgestreckte Elemente für den Wasserkissenbalken 25 mit Schlitzdüsen (51, 53) bevorzugt.

Durch den Wasserkissenbalken 25 werden die Glastafeln 3 gegen die Linearfördermittel 23, z.B. den endlosen Zahnriemen oder die Folge von Endlosriemen oder eine Reihe angetriebener Rollen, gedrückt, sodass der nötige Kraftschluss gewährleistet ist, und die Glastafel 3 auch während des Bearbeitens durch Schleifscheiben 27 und/oder Besäum-bänder 29 (Diamantbänder, vgl. Fig. 5), die z.B. gekreuzt ausgerichtet sind, bearbeitet werden kann.

Dabei ist vorgesehen, dass die Endlosriemen 23 der Linearfördermittel der erfindungsgemäßen Fördervorrichtung im Wesentlichen über ihre gesamte Länge von innen, also von der der Glastafel 3 gegenüberliegenden Seite her, abgestützt sind, sodass in allen Bereichen der nötige Kraftschluss zwischen der zu fördernden Glastafel 3 und dem Linearfördermittel 23 gegeben ist.

Der untere und/oder der obere Wasserkissenbalken 25 kann im Maschinengestell senkrecht zur Förderebene (Ebene der Glastafel 3) verstellbar montiert sein. So kann der Druck mit dem die Glastafel 3 durch das Fluid-(Wasser-)Kissen zwischen Balken 25 und Glastafel 3 gegen das Linearfördermittel 23 (z.B. den Zahnriemen) gedrückt wird, geändert werden, um den Druck an die Festigkeit (Dicke) der Glastafel 3 angepasst zu wählen. Bevorzugt ist dabei, dass die Kraft, mit welcher der oder die Wasserkissenbalken 25 auf die Glastafel 3 hin belastet werden, durch Sensoren ("Kraftsensoren") erfasst wird. Diese Sensoren können mit dem Verstellbantrieb für die (verstellbaren) Wasserkissen-balken 25 funktionell verbunden sein.

Bei der Ausbildung der Schleifstationen 9/13 wie in den Fig. 3 und 5 gezeigt, besteht die Möglichkeit, entweder nur die Schleifköpfe 27 oder nur die Schleifbänder 29 oder aber sowohl die Schleifköpfe 27 als auch die Schleifbänder 29 zu benützen, wobei die Schleifbänder 29 insbesondere dazu dienen, (mikrofeine) Ausmuschelungen an den Rändern von Glastafeln 3 durch Besäumen zu beseitigen.

Dadurch, dass erfindungsgemäß mit einem (Fluid-)Wasserkissenbalken 25 gearbeitet wird, wird nicht nur eine Dämpfungswirkung auf die bearbeitete Glastafel 3 erzielt, also Schwingungen in der Glastafel 3 unterdrückt, sondern auch eine höhere Kraftübertragung gewährleistet. Zusätzlich wird eine Kühlung der Glastafel 3 beim Behandeln durch Schleifen und/oder Besäumen gewährleistet und durch abströmendes Wasser gleich eine Reinigung erzielt, indem Schleifrückstände durch das aus dem Wasserkissenbalken 25 austretende Wasser weggespült werden.

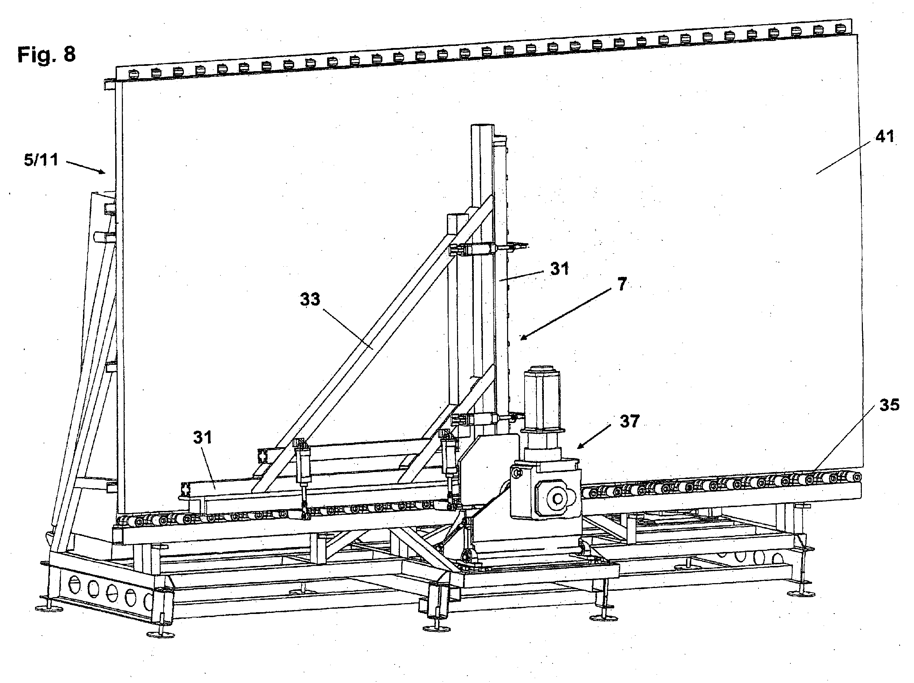

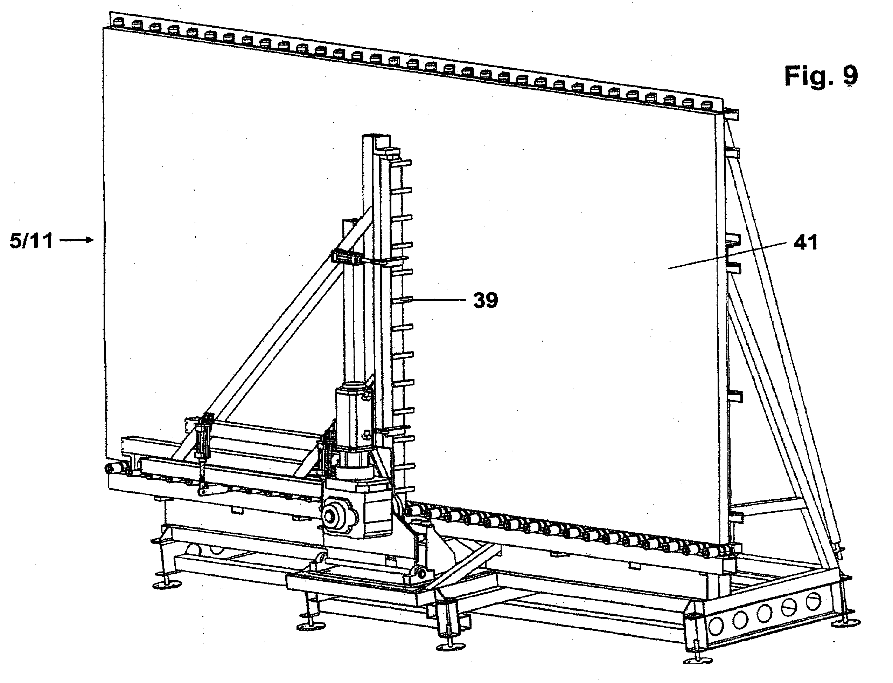

Einzelheiten der Wendevorrichtung (Wendeapparat 7) werden nachstehend anhand der Fig. 8 und 9 erläutert.

Die in den Wendestationen 5 und 11 vorgesehenen Wendeapparate 7 bestehen, wie in den Fig. 8 und 9 gezeigt, aus zwei Armen 31, die miteinander einen rechten Winkel einschließen. Zur Erhöhung der Stabilität können die Arme 31 über einen Verbindungsbalken 33 miteinander verbunden sein. Zum Verschwenken des Wendeapparates 7 um eine zur Förderebene der Glastafeln 3 senkrecht stehende Achse, die im Bereich des unteren Horizontalförderers 35, der im gezeigten Beispiel eine Folge von drehangetriebenen Förderrollen ist, ist ein Antrieb 37 vorgesehen. Mit dem Antrieb 37 kann der Wendeapparat 7 um 90° verschwenkt werden, um Glastafeln 3 zu wenden.

Jeder der beiden Arme 31 des Wendeapparates 7 ist mit einer Reihe von Fingern 39 (Fig. 9) bestückt. Die Finger 39 sind an den Armen 31 um eine zur Längserstreckung des Armes 31 parallele Achse verschwenkbar, sodass sie aus der in Fig. 9 gezeigten Wirklage, in der sie senkrecht zur Förderebene bzw. zur Ebene der Stützwand 41 (diese ist im gezeigten Ausführungsbeispiel eine Luftkissenwand) stehen, in eine zur Förderebene (= Ebene der Stützwand 41) parallele Lage verschwenkt werden.

Beim Verschwenken einer Glastafel 3 greifen die in ihre Wirklage (normal zur Stützwand 41) geschwenkten Finger 39 an den Rändern einer zu wendenden Glastafel 3 an, sodass diese auf dem Luftkissen der Stützwand 41 gleitend nur an ihren Rändern erfasst wird, also die von der Stützwand 41 abgekehrte Fläche nicht berührt wird. So ist ein schonendes Wenden sichergestellt, wobei ein Zerkraten oder Beschädigen der Vorderseite der Glastafel 3 bzw. einer auf ihr angebrachten Beschichtung (Photovoltaikelemente) ausgeschlossen ist.

Die Rollen 35 des Linearförderers am unteren Rand der Stütztwand 41 können durch einen nicht gezeigten Antrieb angetrieben sein.

Zusammenfassend kann ein Ausführungsbeispiel der Erfindung wie folgt beschrieben werden.

Ein Linearförderer 21 für den Transport von Glastafeln 3 im Bereich von Schleifstationen 9, 13 oder einer Waschstation 15, einer Anlage zum Herstellen von Glastafelzuschnitten, weist einen Linearförderer 23, z.B. einen angetriebenen Zahnriemen, auf und diesem gegenüberliegend einen Balken 25, aus dem ein Fluid, insbesondere Wasser, austritt. Durch das aus dem Balken 25 austretende Wasser wird die Glastafel 3 kraftschlüssig gegen den Linearförderer 23 gedrückt und sicher gefördert. Solche Linearförderer 21 können am oberen oder unteren Rand einer Glastafel 3 angeordnet sein, um diese beispielsweise mit Hilfe wenigstens einer Schleifscheibe 27 zu besäumen. Sinngemäße Linearförderer 21 können auch in einer Waschstation 5, 11 vorgesehen sein. Um die Glastafeln 3 um 90° zu schwenken, damit zunächst die beiden oberen und unteren Ränder und dann die zunächst senkrechten Ränder derselben bearbeitet werden können, sind Wendestationen 5, 11 vorgesehen, welche Wendegreifer 7 aufweisen, an denen schwenkbare Finger 39 vorgesehen sind, die zum Verschwenken von Glastafeln 3 lediglich an deren seitlichen Rändern anliegen.

## Patentansprüche

1. Vorrichtung (21) für das Fördern flächiger Werkstücke, insbesondere Glastafeln (3), wobei ein Linearförderer (23) und diesem gegenüberliegend ein Balken (25) vorgesehen ist, aus dem ein Fluid austritt, das ein zwischen dem Linearförderer (23) und dem Balken (25) angeordnetes Werkstück (3) kraftschlüssig gegen den Linearförderer (23) drückt, **dadurch gekennzeichnet, dass** bei stehend transportierten Werkstücken (3) Linearförderer (23) und Balken (25) sowohl im Bereich des oberen Randes (2) als auch im Bereich des unteren Randes (4) des Werkstückes (3) angeordnet sind, dass unterhalb des unteren Linearförderers (23) und Balkens (25) eine Abstützung für das stehend transportierte Werkstück (3), insbesondere eine Folge von Laufrollen (28), vorgesehen ist und dass das Fluid eine Flüssigkeit, wie Wasser, ist.

2. Vorrichtung nach Anspruch 1, **dadurch gekennzeichnet, dass** der obere Rand (2) und der untere Rand (4) des Werkstückes über die Linearförderer (23) und die Balken (25) vorstehend angeordnet sind, wobei den freien Rändern (2 und 4) des Werkstückes (3) jeweils wenigstens ein Werkzeug (27, 29) zugeordnet ist.

3. Vorrichtung nach Anspruch 1 oder 2, **dadurch gekennzeichnet, dass** die Laufrollen (28) frei laufende Stützrollen sind.

4. Vorrichtung nach Anspruch 1 oder 2, **dadurch gekennzeichnet, dass** die Laufrollen (28) angetriebene Stützrollen sind.

5. Vorrichtung nach einem der Ansprüche 1 bis 4, **dadurch gekennzeichnet, dass** der Abstand zwischen dem unteren Linearförderer (23) und dem oberen Linearförderer (23) veränderbar ist, insbesondere indem der obere Linearförderer (23) in der Ebene, in dem das Werkstück (3) gefördert wird, verstellbar ist.

6. Vorrichtung nach einem der Ansprüche 1 bis 5, **dadurch gekennzeichnet, dass** der Balken (25) wenigstens zwei voneinander beabstandete Schlitze (51, 55) für den Austritt von Flüssigkeit, wie Wasser, aufweist.

7. Vorrichtung nach Anspruch 6, **dadurch gekennzeichnet, dass** die Schlitze (51) zur freien, dem Werkstück (3) gegenüberliegenden Seite des Balkens (25) hin divergieren.

8. Vorrichtung nach Anspruch 6, **dadurch gekennzeichnet, dass** die Schlitze (55) zur freien, dem Werkstück (3) gegenüberliegenden Seite des Balkens (25) hin konvergieren.

9. Vorrichtung nach einem der Ansprüche 1 bis 8, **dadurch gekennzeichnet, dass** der Balken (25) aus mehreren Abschnitten besteht.

10. Vorrichtung nach einem der Ansprüche 1 bis 8, **dadurch gekennzeichnet, dass** der Balken (25) aus mehreren, kreisrunden Elementen zusammengesetzt ist, wobei die Düsen (51, 55) Ringdüsen sind.

11. Vorrichtung nach einem der Ansprüche 1 bis 10, **dadurch gekennzeichnet, dass** der Balken (25) quer zur Förderebene des Werkstückes (3) verstellbar ist.

12. Vorrichtung nach Anspruch 11, **dadurch gekennzeichnet, dass** wenigstens ein Antrieb für das Verstellen des Balkens (25) vorgesehen ist.

13. Vorrichtung nach Anspruch 11 oder 12, **dadurch gekennzeichnet, dass** wenigstens ein die Kraft, mit welcher der Balken (25) auf das Werkstück (3) hin belastet ist, erfassender Sensor vorgesehen ist.

14. Vorrichtung nach Anspruch 13, **dadurch gekennzeichnet, dass** der Sensor funktionell mit dem Antrieb verbunden ist.

15. Anlage zum Bearbeiten von Glastafelzuschnitten, **dadurch gekennzeichnet, dass** im Bereich wenigstens einer Schleifstation (9, 13) und einer Waschstation (15) Vorrichtungen (21) gemäß einem oder mehreren der Ansprüche 1 bis 14 vorgesehen sind.

16. Anlage nach Anspruch 15, **dadurch gekennzeichnet, dass** zwei Schleifstationen (9, 13) vorgesehen sind, in welchen der jeweils obere und untere horizontale Rand (2, 4) des Werkstückes (3) bearbeitet wird, und dass vor der ersten Schleifstation (9) eine Wendestation (5) mit einem Wendeapparat (7) und nach der ersten Schleifstation (9) und vor der zweiten Schleifstation (13) eine weitere Wendestation (11) mit einem Wendeapparat (7) vorgesehen ist.

17. Anlage nach Anspruch 16, **dadurch gekennzeichnet, dass** der Wendeapparat (7) zwei Arme (31) aufweist, an denen verschwenkbare Finger (39) für den Angriff an den Rändern der Glasscheibe (3) vorgesehen sind.

18. Anlage nach Anspruch 17, **dadurch gekennzeichnet, dass** die Finger (39) an den Armen (31) um eine zur Längserstreckung der Arme (31) parallele Achse verschwenkbar sind, derart, dass sie aus einer Gebrauchslage, in der sie zur Förderebene im Wesentlichen senkrecht stehen, in eine Bereitschaftslage, in der sie in Förderrichtung ausgerichtet sind, verschwenkbar sind.

## Claims

1. Device (21) for conveying flat workpieces, especially glass panels (3), whereby a linear conveyor (23) and opposite to that a beam (25) are provided from which a fluid exits, which presses a workpiece that is arranged between the linear conveyor (23) and the beam (25) frictionally against the linear conveyor (23), **characterized in that** when standing workpieces (3) are transported, linear conveyors (23) and beams (25) are disposed both in the area of an upper edge (2) and in the area of the lower edge (4) of the workpiece (3), that underneath the lower linear conveyor (23) and the beam (25) a support, especially a train of rollers (28), for the workpiece which is transported standingly is provided and that the fluid is a liquid, as water.

2. Device according to claim 1 **characterized in that** the upper edge (2) and the lower edge (4) of the workpiece are arranged is projecting beyond the linear conveyors (23) and the beams (25), whereby at least one tool (27, 29) is assigned in each case to the free edges (2 and 4) of the workpiece (3).

3. Device according to claim 1 or 2, **characterized in that** the rollers (28) are free-wheel supporting rollers.

4. Device according to claim 1 or 2, **characterized in that** the rollers (28) are powered supporting rollers.

5. Device according to one of claims 1 to 4, **characterized in that** the distance between the lower linear conveyor (23) and the upper linear conveyor (23) is variable, especially **in that** the upper linear conveyor (23) is adjustable in the plane in which the workpiece (3) is conveyed.

6. Device according to one of claims 1 to 5, **characterized in that** the beam (25) has at least two slots (51, 55), separated from one another, for the discharge of liquid, as water.

7. Device according to claim 6, **characterized in that** the slots (51) diverge toward the free side of the beam (25), which side faces the workpiece (3).

8. Device according to claim 6, **characterized in that** the slots (55) converge toward the free side of the beam (25), which side faces the workpiece (3).

9. Device according to one of claims 1 to 8, **characterized in that** the beam (25) is composed of multiple sections.

10. Device according to one of claims 1 to 8, **characterized in that** the beam (25) is composed of multiple circular elements, whereby the nozzles (51, 55) are ring nozzles.

11. Device according to one of claims 1 to 10, **characterized in that** the beam (25) is adjustable transversely to the conveying plane of the workpiece (3).

12. Device according to claim 11, **characterized in that** at least one drive is provided for the adjustment of the beam (25).

13. Device according to claim 11 or 12, **characterized in that** at least one sensor is provided that records the force with which the beam (25) is loaded toward the workpiece (3).

14. Device according to claim 13, **characterized in that** the sensor is functionally connected to the drive.

15. Facility for treating glass panel blanks, **characterized in that**, in the area of at least one grinding station (9, 13) and a washing station (15) devices (21) according to one or more of claims 1 to 14 are provided.

16. Facility according to claim 15, **characterized in that** two grinding stations (9, 13) are provided, in which each of the upper and lower horizontal edges (2, 4) of the workpiece (3) are processed, and that ahead the first grinding station (9), a turning station (5) with a turning device (7) is provided, and after the first grinding station (9) and ahead the second grinding station (13), another turning station (11) with a turning device (7) is provided.

17. Facility according to claim 16, **characterized in that** the turning device (7) has two arms (31) on which pivotable fingers (39) are provided for engaging the edges of the glass pane (3).

18. Facility according to claim 17, **characterized in that** the fingers (39) on the arms (31) are pivotable about an axis parallel to the longitudinal extension of the arm (31), such that they are pivotable from an operating position, in which they stand essentially perpendicular to the conveying plane, to a standby position, in which they are oriented in the conveying direction.

## Revendications

1. Dispositif (21) pour le transport de pièces planes, en particulier de panneaux de verre (3), dans lequel un transporteur linéaire (23) et une barre (25) qui lui est opposée est prévu, duquel sort un fluide qui comprime une pièce (3) disposée entre le transporteur linéaire (23) et la barre (25), contre le transporteur linéaire (23) par adhérence de force, **caractérisé en ce que** lorsque les pièces (3) sont transportées debout, des transporteurs linéaires (23) et des barres (25) sont disposés tant au niveau du bord supérieur (2) qu'au niveau du bord inférieur (4) de la pièce (3), qu'en dessous du transporteur linéaire (23) et de la barre (25) est prévu un appui pour la pièce (3) transportée debout, en particulier une suite de galets de roulement (28) et que le fluide est un liquide, comme de l'eau.

2. Dispositif selon la revendication 1, **caractérisé en ce que** le bord supérieur (2) et le bord inférieur (4) de la pièce sont disposés en porte-à-faux au-dessus des transporteurs linéaires (23) et des barres (25), sachant qu'aux bords libres (2 et 4) de la pièce (3) correspond respectivement au moins un outil (27, 29).

3. Dispositif selon la revendication 1 ou 2, **caractérisé en ce que** les galets de roulement (28) sont des roulettes d'appui à roulement libre.

4. Dispositif selon la revendication 1 ou 2, **caractérisé en ce que** les galets de roulement (28) sont des roulettes d'appui entraînées.

5. Dispositif selon l'une des revendications 1 à 4, **caractérisé en ce que** la distance entre le transporteur linéaire inférieur (23) et le transporteur linéaire supérieur (23) est modifiable, en particulier **en ce que** le transporteur linéaire supérieur (23) peut être déplacé dans le plan dans lequel la pièce (3) est transportée.

6. Dispositif selon l'une des revendications 1 à 5, **caractérisé en ce que** la barre (25) présente au moins deux fentes (51, 55) distantes l'une de l'autre pour la sortie de liquide, comme de l'eau.

7. Dispositif selon la revendication 6, **caractérisé en ce que** les fentes (51) divergent en direction du côté libre de la barre (25) opposé à la pièce (3).

8. Dispositif selon la revendication 6, **caractérisé en ce que** les fentes (55) convergent en direction du côté libre de la barre (25) opposé à la pièce (3).

9. Dispositif selon l'une des revendications 1 à 8, **caractérisé en ce que** la barre (25) est composée de plusieurs tronçons.

10. Dispositif selon l'une des revendications 1 à 8, **caractérisé en ce que** la barre (25) est composée de plusieurs éléments ronds, sachant que les buses (51, 55) sont des buses annulaires.

11. Dispositif selon l'une des revendications 1 à 10, **caractérisé en ce que** la barre (25) peut être déplacée transversalement au plan de transport de la pièce (3).

12. Dispositif selon la revendication 11, **caractérisé en ce qu'**au moins un entraînement est prévu pour le déplacement de la barre (25).

13. Dispositif selon la revendication 11 ou 12, **caractérisé en ce qu'**au moins un capteur détectant la force avec laquelle la barre (25) est contrainte sur la pièce (3), est prévu.

14. Dispositif selon la revendication 13, **caractérisé en ce que** le capteur est relié de façon fonctionnelle à l'entraînement.

15. Installation pour l'usinage de découpes de panneaux de verre, **caractérisé en ce qu'**au niveau d'un poste de meulage (9, 13) et d'un poste de lavage (15), des dispositifs (21) sont prévus selon l'une ou plusieurs des revendications 1 à 14.

16. Installation selon la revendication 15, **caractérisé en ce que** deux postes de meulage (9, 13) sont prévus, dans lesquels les bords supérieur et inférieur (2, 4) respectifs de la pièce (3) sont usinés, et qu'avant le premier poste de meulage (9) est prévu un poste de retournement (5) avec un appareil de retournement (7) et qu'après le premier poste de meulage (9) et avant le second poste de meulage (13) est prévu un poste de retournement (11) supplémentaire avec un appareil de retournement (7).

17. Installation selon la revendication 16, **caractérisé en ce que** l'appareil de retournement (7) présente deux bras (31) sur lesquels des doigts pivotants (39) sont prévus pour saisir les bords du panneau de verre (3).

18. Installation selon la revendication 17, **caractérisé en ce que** les doigts (39) peuvent pivoter sur les bras (31) sur un axe parallèle à l'étirement longitudinal des bras (31), de telle sorte qu'ils peuvent pivoter d'une position d'utilisation dans laquelle ils sont essentiellement verticaux au plan de transport, à une position de mise à disposition dans laquelle ils sont alignés dans le sens de transport.
